# EUROPÄISCHE PATENTSCHRIFT

(11) **EP 0 983 914 B1**
(45) Veröffentlichungstag und Bekanntmachung des Hinweises auf die Patenterteilung: **09.08.2006**
(21) Anmeldenummer: 99116861.8
(22) Anmeldetag: 03.09.1999
(51) Int. Cl.: B60R 21/20

(54) **Mittel zur Befestigung eines Gasgenerators in einem Airbagmodul**
Means for fastening a gas generator in an airbag module
Moyen de fixation d'un générateur de gaz dans un module de coussin gonflable

(30) Priorität: 04.09.1998 DE 29815940 U
(43) Veröffentlichungstag der Anmeldung: 08.03.2000
(73) Patentinhaber: TRW Automotive Safety Systems GmbH, 63743 Aschaffenburg (DE)
(72) Erfinder: Schütz, Dominik, 63857 Waldaschaff (DE)
(74) Vertreter: Degwert, Hartmut

(56) Entgegenhaltungen:
- DE-A- 3 604 843
- US-A- 5 423 568
- US-A- 5 613 700
- US-A- 5 791 682

## Beschreibung

Die Erfindung betrifft Mittel zur Befestigung eines Gasgenerators in einem vormontierten Airbagmodul, das einen topfförmigen Generatorträger, einen Luftsack und ein Luftsackhalteblech umfaßt, wobei Generatorträger, Luftsack und Luftsackhalteblech koaxial zueinander angeordnete Montageöffnungen für den Gasgenerator aufweisen und wobei Spannmittel vorgesehen sind, durch die der Rand der Montageöffnung des Luftsacks zwischen dem Luftsack Halteblech und dem Generatorträger einklemmbar ist.

Bei den derzeit in großer Stückzahl verwendeten Airbag-Modulen wird der Gasgenerator direkt beim Zusammensetzen des Airbag-Moduls mittels Schrauben und Muttern an dem teilmontierten Airbag-Modul befestigt, wozu ein am Gehäuse des Gasgenerators angebrachter Flansch erforderlich ist. Der Nachteil dieser Befestigungsmittel und der darauf beruhenden Montageabfolge besteht darin, daß eine Serienüberwachung des kompletten Airbag-Moduls bereits an der Fertigungsstraße erforderlich wird und daß die Weiterbeförderung der mit einem Gasgenerator bestückten Airbag-Module nur unter den für Gefahrguttransporte vorgeschriebenen Sicherheitsmaßnahmen durchgeführt werden kann. Außerdem benötigt der Flansch am Gehäuse des Gasgenerators Bauraum und muß von Modul zu Modul unterschiedlich positioniert werden, so daß eine Standardisierung des Gehäuses für den Gasgenerator sehr erschwert wird und die Vorteile einer Großserienfertigung derartiger Gehäuse nur bedingt genutzt werden können.

In der US-A-5,423,568 wird ein Gasgenerator gemäß den Oberbegriffen der Ansprüche 1 und 6 offerbart, der an einem Generatorträger befestigt wird, an dem schon ein Luftsack befestigt ist. Das flanschlose Gehäuse des Gasgenerators weist am Umfang verteilt mehrere radial nach außen vorstehende Stifte auf, die jeweils mit einem am Generatorträger vorgesehenen Schlitz in Eingriff gebracht werden können. Die Stifte bilden zusammen mit den Schlitzen einen Bajonett-Verschluß.

Daraus ergibt sich die Aufgabe, Mittel der eingangs genannten Art bereit zu stellen, mit denen die vorgenannten Nachteile überwunden werden können, die eine Großserienfertigung der Gehäuse für den Gasgenerator mit einheitlichen Abmessungen gestatten und die es erlauben, das Airbag-Modul ohne den Gasgenerator vorzumontieren und ohne besondere Sicherheitsvorkehrungen lagern und transportieren zu können. Soweit bei unterschiedlichen Airbag-Modultypen der Gasgenerator relativ zum Gasgeneratorträger in unterschiedlichen Höhenlagen positioniert werden muß, sollen derartige Abwandlungen konstruktiv nicht am relativ teuren Gehäuse des Gasgenerators, sondern anderweitig realisiert werden.

Erfindungsgemäß wird diese Aufgabe durch die Merkmale des Anspruchs 1 bzw. des Anspruchs 6 gelöst.

Zur Lösung dieser Aufgabe wird gemäß einem ersten Erfindungsgedanken vorgeschlagen daß das Gehäuse des Gasgenerators flanschlos ausgebildet und das Luftstackhalteblech einen sich durch die Montageöffnung hindurch erstreckenden, zylindrischen Ansatz aufweist, an dem des Gasgenerator mittels eines Bajonett- oder Snap-in-verschlusses befestigt ist. Gemäß einem zweiten Erfindungsgedanken ist vorgesehen, daß das Gehäuse des Gasgenerators flanschlos ausgebildet und mittels eines Bajonett- oder Snap-in-Verschlusses mit dem Airbagmodul verbunden ist, und daß ein die Montageöffnung zum Luftsack hin begrenzendes Deckelteil vorgesehen ist, das mit dem vormontierten Airbagmodul verbunden ist und an dem der Gasgenerator in der Montageendposition unter Vorspannung eines elastischen Spannteils anliegt. Infolge der bei flanschlosen Gehäusen möglichen anderen Befestigungsarten kann das Airbag-Modul ohne den Gasgenerator vormontiert und als ungefährliche Baueinheit problemlos gelagert und transportiert werden. Bei den bisher vielfach verwendeten Gehäusen mit Flansch dienten die Schrauben, mittels derer der Rand der Gaseintrittsöffnung des Luftsacks zwischen Luftsackhalteblech und Generatorträger eingeklemmt wurde, gleichzeitig zur Befestigung des Gasgenerators. Bei der Festlegung des zusammengefalteten Luftsacks im Airbag-Modul mußte man daher entweder den Gasgenerator gleich mit montieren, oder aber es mußten die Schrauben, die das vormontierte Airbag-Modul ohne Gasgenerator zusammenhielten, zur Befestigung des Gasgenerators nochmals gelöst werden. Durch die Verwendung eines flanschlosen Gehäuses für den Gasgenerator entfällt die Notwendigkeit für jede unterschiedliche Höhenlage des Gasgenerators relativ zum Generatorträger, ein separates Gehäuse mit entsprechend positioniertem Flansch herzustellen. Die Montage ist entkoppelt, und das Airbag-Modul kann ohne Gasgenerator gehandhabt werden. Schließlich können mit dem Erfindungsgedanken auch wirtschaftliche Vorteile verbunden sein, wenn der Auftraggeber nicht darauf angewiesen ist, das Airbag-Modul und den Gasgenerator vom selben Hersteller beziehen zu müssen.

Vorteilhafte Ausgestaltungen und Abwandlungen des Erfindungsgedankens sind in den Unteransprüchen 2 bis 5 und 7 bis 15 beschrieben. Weitere Einzelheiten werden anhand der in den Figuren 1 bis 5 dargestellten Ausführungsbeispiele näher erläutert. Es zeigen:
Fig. 1 eine erste Ausführungsform des Erfindungsgedankens mit Bajonett-Verschluß;
Fig. 2 eine zweite Ausführungsform des Erfindungsgedankens mit einem Snap-in-Verschluß;
Fig. 3 eine andere Ausführungsform des Erfindungsgedankens mit Snap-in-Verschluß;
Fig. 4 eine weitere Variante des Erfindungsgedankens mit Snap-in-Verschluß; und
Fig. 5 eine Abwandlung der in Fig. 2 dargestellten Ausführungsform.

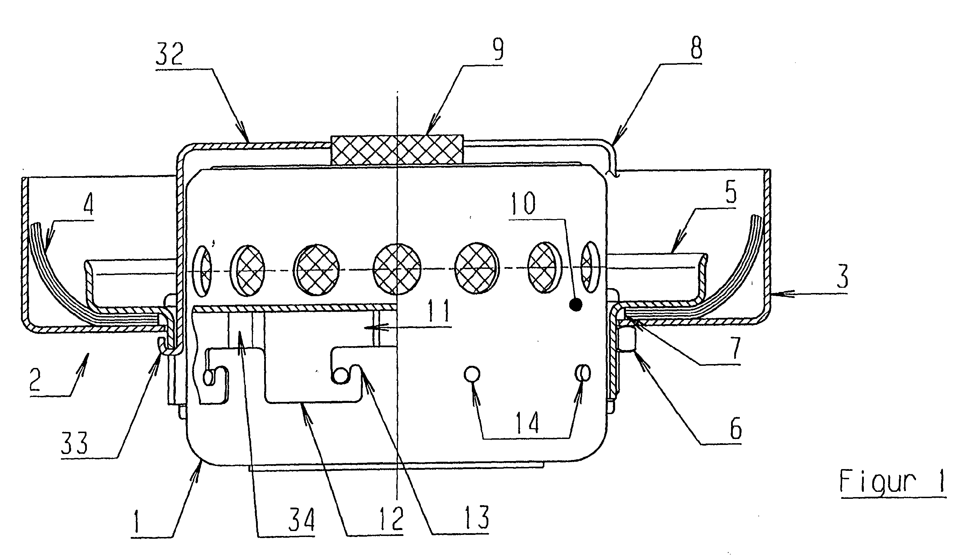

Fig. 1 zeigt ein vormontiertes Airbag-Modul 2 mit einem topfförmigen Generatorträger 3, einem Luftsack 4 und einem Luftsackhalteblech 5, wobei der Rand 7 der Montageöffnung des Luftsacks 4 zwischen dem Luftsackhalteblech 5 und dem Generatorträger 3 in an sich bekannter Weise mittels Spannmitteln 6 eingeklemmt ist.

Bei dieser Ausführungsform ist das Luftsackhalteblech 5 einstückig mit einem sich durch die Montageöffnung nach unten erstreckenden, zylindrischen Ansatz 11 ausgebildet, der am Umfang verteilt, mehrere nach unten weisende Flanschteile 12 aufweist, die einen nach oben offenen Hakenbereich 13 aufweisen. Am Gehäuse 10 des Gasgenerators 1 ist eine entsprechende Anzahl radial nach außen vorstehender Stifte 14 angebracht, die nach Art eines Bajonett-Verschlusses in die Hakenbereiche 13 eingreifen, wodurch der Gasgenerator 1 im Airbag-Modul 2 befestigt wird.

Die in Fig. 1 dargestellte Ausführungsform des Erfindungsgedankens ist außerdem mit einem die Montageöffnung zum Luftsack 4 hin begrenzenden Deckelteil 8 ausgestattet, an dessen unterem Rand nach außen und oben umgebogene Haken 33 vorgesehen sind, die in entsprechenden Ausnehmungen 34 des zylindrischen Ansatzes 11 eingreifen. Zwischen Deckelteil 8 und Gehäuse 10 des Gasgenerators 1 ist ein elastisches Spannteil in Form eines Gummipuffers 9 angeordnet, das für die bei einem Bajonett-Verschluß permanent erforderliche Vorspannung sorgt, durch die die Stifte 14 gegen die Hakenbereiche 13 angedrückt werden. Das Deckelteil 8 kann topfförmig ausgebildet sein oder aus einer Anzahl gitterförmig angeordneter Stege 32 bestehen.

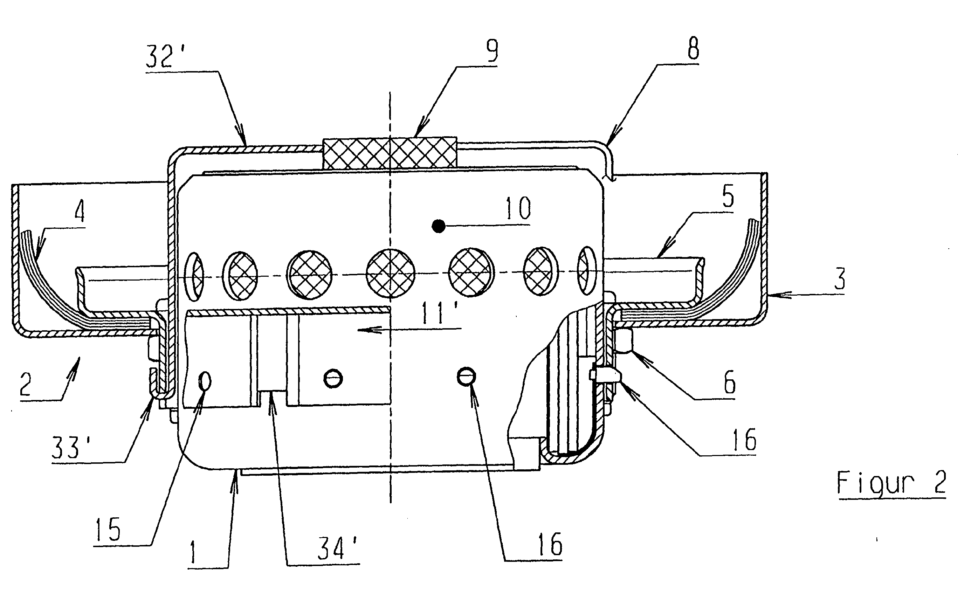

Die Ausführungsform gemäß Fig. 2 unterscheidet sich von derjenigen gemäß Fig. 1 dadurch, daß im zylindrischen Ansatz 11' am Umfang verteilt mehrere radiale Bohrungen 15 vorgesehen sind, in die am Gehäuse 10 des Gasgenerators 1 angeordnete, gegen Rückstellkräfte radial nach innen verschiebbare Stifte 16 eingreifen können. Alle übrigen Bezugsziffern haben die gleiche Bedeutung, wie in Fig. 1 und werden hier nicht noch einmal erläutert.

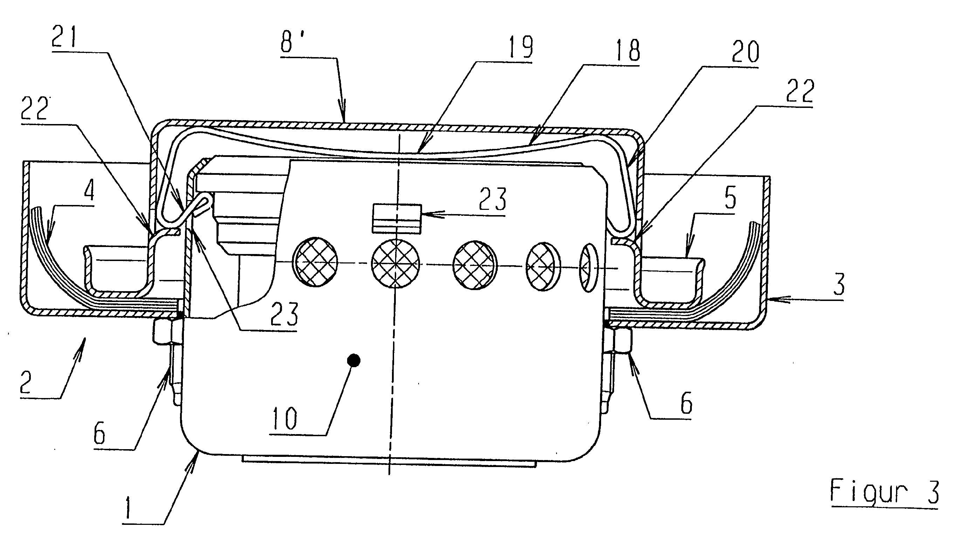

Bei der Ausführungsform gemäß Fig. 3 ist ein Deckelteil 8' einstückig mit dem Luftsackhalteblech 5 ausgebildet. Zur Befestigung des Gasgenerators 1 im Airbag-Modul 2 ist wenigstens ein Federbügel 18 vorgesehen, dessen konvex geformter Mittelbereich 19 sich im Montageendzustand unter Vorspannung auf dem Gehäuse 10 abstützt, während seine Randbereiche am Deckelteil 8' anliegen. Der Federbügel 18 besitzt nach unten abgewinkelte Seitenbereiche 20, die nach innen abgebogen sind und sich auf nach innen abgewinkelten Flanschbereichen 22 des Deckelteils 8' abstützen. Die Enden 21 der Seitenbereiche 20 sind nach innen und oben abgewinkelt und greifen in der Montageendposition in Ausnehmungen 23 in der Gehäusewand 10 ein, wodurch der Gasgenerator unter Spannung des Federbügels 18 im Deckelteil 8' befestigt ist. Alle übrigen Bezugsziffern haben die gleiche Bedeutung, wie in Fig. 1 und werden hier nicht noch einmal erläutert.

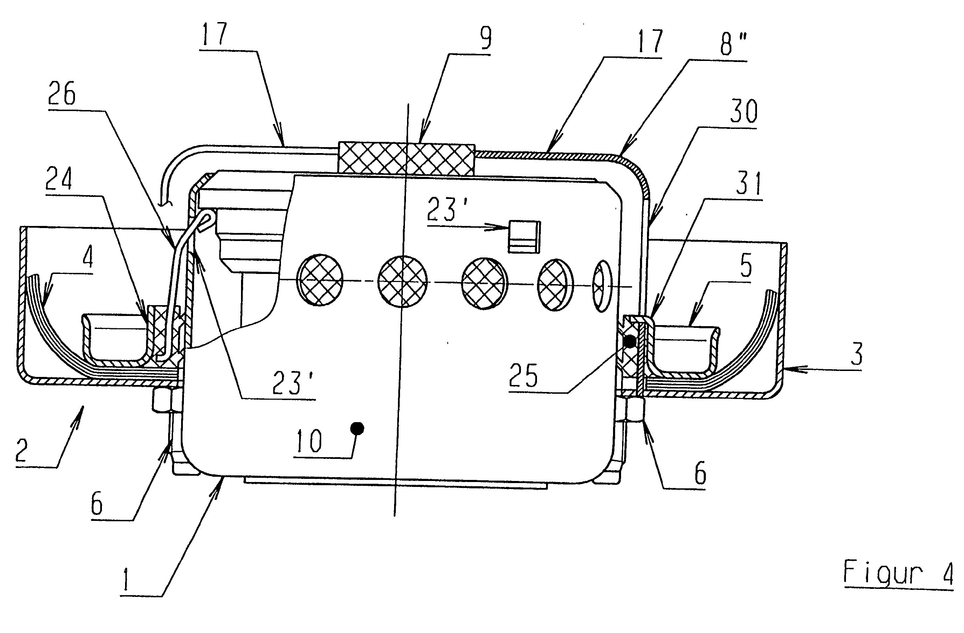

Bei der Ausführungsform gemäß Fig. 4 besteht das Deckelteil 8'' aus einer Mehrzahl von Metallbügeln 17 mit einem zentral angeordneten Gummipuffer 9. Die nach unten abgewinkelten Enden der Metallbügel 17 weisen Langlöcher 30 auf, in die in der Montageendposition radial nach innen weisende Abwinkelungen 31 des Luftsackhalteblechs 5 eingreifen. Das Luftsackhalteblech 5 besitzt einen sich koaxial zur Seitenwand des Gehäuses 10 erstreckenden, zylindrischen Wandabschnitt 24, an dem die unteren Enden der Metallbügel 17 geführt sind. Zwischen dem Wandbereich 24 und der Seitenwand des Gehäuses 10 ist eine umlaufende, elastische Dichtung 25 angeordnet, in die die unteren Enden von drei oder mehr Haken 26 eingebettet sind, deren obere Enden in der Montageendposition in entsprechende Ausnehmungen 23' der Gehäusewand 10 eingreifen, wodurch der Gasgenerator 1 elastisch mit dem Airbag-Modul 2 verbunden ist. Die übrigen Bezugsziffern haben die gleiche Bedeutung, wie in Fig. 1 und werden hier nicht noch einmal erläutert.

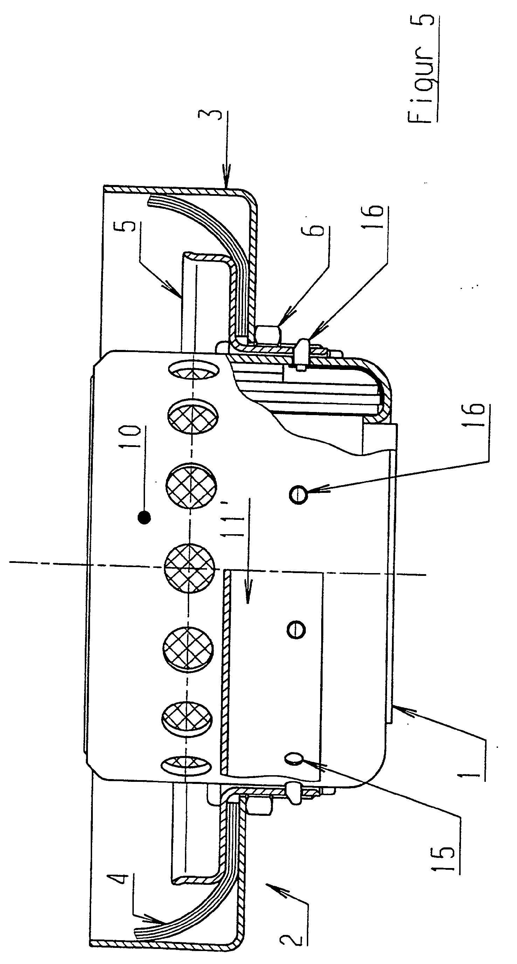

Fig. 5 stellt eine Abwandlung des in Fig. 2 dargestellten Ausführungsbeispieles dar. In diesem Fall ist das Deckelteil 8 mit dem Gummipuffer 9 weggelassen worden, weil man den zylindrischen Ansatz 11' mit seinen radialen Bohrungen und die am Gehäuse 10 des Generators vorgesehenen, radial nach außen vorgespannten Stifte 16 konstruktiv auch so bemessen kann, daß ein Deckelteil nicht erforderlich ist. Dementsprechend entfallen selbstverständlich auch die konstruktiven Einzelheiten, die zur Befestigung des Deckelteils 8 erforderlich sind (Positionen 33' und 34' in Fig. 2). Die übrigen Bezugsziffern müssen nicht mehr erläutert werden.

## Patentansprüche

1. Mittel zur Befestigung eines Gasgenerators (1) in einem vormontierten Airbagmodul (2), das einen topfförmigen Generatorträger (3), einen Luftsack (4) und ein Luftsackhalteblech (5) umfaßt, wobei Generatorträger (3), Luftsack (4) und Luftsackhalteblech (5) koaxial zueinander angeordnete Montageöffnungen für den Gasgenerator (1) aufweisen und Spannmittel (6) vorgesehen sind, durch die der Rand (7) der Montageöffnung des Luftsacks (4) zwischen dem Luftsackhalteblech (5) und dem Generatorträger (3) einklemmbar ist, und wobei das Gehäuse (10) des Gasgenerators (1) flanschlos ausgebildet ist, **dadurch gekennzeichnet, daß** das Luftsackhalteblech (5) einen sich durch die Montageöffnung hindurch erstreckenden, zylindrischen Ansatz (11, 11') aufweist, an dem der Gasgenerator (1) mittels eines Bajonett- oder Snap-in-Verschlusses befestigt ist.

2. Mittel nach Anspruch 1, **dadurch gekennzeichnet, daß** im zylindrischen Ansatz (11') am Umfang verteilt mehrere radiale Bohrungen (15) vorgesehen sind, in die am Gehäuse (10) des Gasgenerators (1) angeordnete, gegen Rückstellkräfte radial nach innen verschiebbare Stifte (16) eingreifen können.

3. Mittel nach Anspruch 1, **dadurch gekennzeichnet, daß** am unteren Rand des zylindrischen Ansatzes (11) am Umfang verteilt mehrere nach unten weisende Flanschteile (12) ausgebildet sind, die einen nach oben offenen Hakenbereich (13) aufweisen, und daß am Gehäuse (10) des Gasgenerators (1) eine entsprechende Anzahl radial nach außen vorstehender Stifte (14) angebracht ist, die zusammen mit den Hakenbereichen (13) einen Bajonett-Verschluß bilden.

4. Mittel nach einem der Ansprüche 1 bis 3, **dadurch gekennzeichnet, daß** ein die Montageöffnung zum Luftsack (4) hin begrenzendes Deckelteil (8) vorgesehen ist, das mit dem vormontierten Airbag-Modul (2) verbunden ist und an dem der Gasgenerator (1) in der Montageendposition unter Vorspannung eines elastischen Spannteils (9) anliegt.

5. Mittel nach Anspruch 4, **dadurch gekennzeichnet, daß** das Deckelteil (8) eine Mehrzahl von Stegen (32, 32') umfaßt, die sich zwischen Gasgenerator (1) und Luftsackhalteblech (5) hindurch erstrecken und deren untere Enden (33, 33') nach außen und oben umgebogen sind und in Ausnehmungen (34, 34') eingreifen, die am unteren Rand des zylindrischen Ansatzes (11, 11') des Luftsackhalteblechs (5) ausgebildet sind.

6. Mittel zur Befestigung eines Gasgenerators (1) in einem vormontierten Airbagmodul (2), das einen topfförmigen Generatorträger (3), einen Luftsack (4) und ein Luftsackhalteblech (5) umfaßt, wobei Generatorträger (3), Luftsack (4) und Luftsackhalteblech (5) koaxial zueinander angeordnete Montageöffnungen für den Gasgenerator (1) aufweisen und Spannmittel (6) vorgesehen sind, durch die der Rand (7) der Montageöffnung des Luftsacks (4) zwischen dem Luftsackhalteblech (5) und dem Generatorträger (3) einklemmbar ist, wobei das Gehäuse (10) des Gasgenerators (1) flanschlos ausgebildet und mittels eines Bajonett- oder Snap-in-Verschlusses mit dem Airbagmodul (2) verbunden ist, **dadurch gekennzeichnet, daß** ein die Montageöffnung zum Luftsack hin begrenzendes Deckelteil (8', 8") vorgesehen ist, das mit dem vormontierten Airbag-Modul (2) verbunden ist und an dem der Gasgenerator (1) in der Montageendposition unter Vorspannung eines elastischen Spannteils (9, 19) anliegt.

7. Mittel nach Anspruch 6, **dadurch gekennzeichnet, daß** das Deckelteil (8') einstückig mit dem Luftsackhalteblech (5) ausgebildet ist.

8. Mittel nach Anspruch 7, **dadurch gekennzeichnet, daß** in der Montageendposition zwischen dem Deckelteil (8') und dem Gehäuse (10) des Gasgenerators (1) wenigstens ein Federbügel (18) angeordnet ist, der einen nach unten konvex geformten Mittelbereich (19) und nach unten abgewinkelte Seitenbereiche (20) aufweist, die nach innen umgebogen sind und sich auf radial nach innen abgewinkelten Flanschbereichen (22) des Deckelteils (8') abstützen, wobei die schräg nach innen und oben abgewinkelten Enden (21) der Seitenbereiche (20) in Ausnehmungen (23) des Gehäuses (10) eingreifen, wodurch der Gasgenerator unter Spannung des Federbügels (18) im Deckelteil (8') befestigt ist.

9. Mittel nach Anspruch 8, **dadurch gekennzeichnet, daß** ein dreiarmiger Federbügel (18) mit drei Seitenbereichen (20) verwendet wird.

10. Mittel nach Anspruch 8, **dadurch gekennzeichnet, daß** zwei zweiarmige Federbügel (18) mit insgesamt vier Seitenbereichen (20) verwendet werden.

11. Mittel nach Anspruch 6, **dadurch gekennzeichnet, daß** das Deckelteil (8") aus einer Mehrzahl von Metallbügeln (17) mit einem zentral angeordneten Gummipuffer (9) besteht.

12. Mittel nach Anspruch 11, **dadurch gekennzeichnet, daß** die in Richtung des Luftsackhalteblechs (5) abgewinkelten Enden der Metallbügel (17) Langlöcher (30) aufweisen, in die in der Montageendposition radial nach innen weisende Abwinkelungen (31) des Luftsackhalteblechs (5) eingreifen.

13. Mittel nach Anspruch 12, **dadurch gekennzeichnet, daß** am Luftsackhalteblech (5) ein sich koaxial zur Seitenwand des Gehäuses (10) des Generators (1) erstreckender, zylindrischer Wandbereich (24) zur Führung der unteren Enden der Metallbügel (17) ausgebildet ist.

14. Mittel nach Anspruch 13, **dadurch gekennzeichnet, daß** zwischen dem Wandabschnitt (24) und der Seitenwand des Gehäuses (10) eine umlaufende, elastische Dichtung (25) angeordnet ist.

15. Mittel nach Anspruch 14, **dadurch gekennzeichnet, daß** in die Dichtung (25) die unteren Enden von drei oder mehr Haken (26) eingebettet sind, deren obere Enden in der Montageendposition in Ausnehmungen (23') des Gehäuses (10) eingreifen, wodurch der Gasgenerator (1) elastisch mit dem Airbag-Modul (2) verbunden ist.

## Claims

1. A means for securing a gas generator (1) in a pre-assembled air bag module (2) which comprises a cup-shaped generator carrier (3), an air bag (4) and an air bag retaining plate (5), the generator carrier (3), the air bag (4) and the air bag retaining plate (5) having assembly openings for the gas generator (1) which are in a coaxial arrangement with respect to each other, and clamping means (6) being provided by which the rim (7) of the assembly opening of the air bag (4) can be clamped between the air bag retaining plate (5) and the generator carrier (3), and the housing (10) of the gas generator (1) being made to be flangeless, **characterized in that** the air bag retaining plate (5) has a cylindrical neck (11, 11') which extends through the assembly opening and to which the gas generator (1) is attached by means of a bayonet or snap-in connection.

2. The means according to claim 1, **characterized in that** a plurality of radial bores (15) are provided as distributed around the circumference of the cylindrical neck (11'), which bores can be engaged by pins (16) arranged at the housing (10) of the gas generator (1) and movable radially inwards against return forces.

3. The means according to claim 1, **characterized in that** a plurality of downward-pointing flange parts (12) are formed as distributed around the circumference of the cylindrical neck (11) at the lower rim thereof, the flange parts each having a hook-shaped portion (13) open towards the top, and that a corresponding number of radially outwardly projecting pins (14) is fitted to the housing (10) of the gas generator (1), which form a bayonet connection in conjunction with the hook-shaped portions (13).

4. The means according to any of claims 1 to 3, **characterized in that** a cover piece (8) is provided which limits the assembly opening with respect to the air bag (4) and is connected to the pre-assembled air bag module (2), the gas generator (1) lying against the cover piece (8) in the final assembled position under pretension of an elastic tensioning element (9).

5. The means according to claim 4, **characterized in that** the cover piece (8) includes a plurality of webs (32, 32') which extend between the gas generator (1) and the air bag retaining plate (5) and the lower ends (33, 33') of which are bent outwards and upwards and engage in cutouts (34, 34') which are formed at the lower rim of the cylindrical neck (11, 11') of the air bag retaining plate (5).

6. A means for securing a gas generator (1) in a pre-assembled air bag module (2) which comprises a cup-shaped generator carrier (3), an air bag (4) and an air bag retaining plate (5), the generator carrier (3), the air bag (4) and the air bag retaining plate (5) having assembly openings for the gas generator (1) which are in a coaxial arrangement with respect to each other, and clamping means (6) being provided by which the rim (7) of the assembly opening of the air bag (4) can be clamped between the air bag retaining plate (5) and the generator carrier (3), the housing (10) of the gas generator (1) being made to be flangeless and being connected to the air bag module (2) by means of a bayonet or snap-in connection, **characterized in that** a cover piece (8', 8") is provided which limits the assembly opening with respect to the air bag and is connected to the pre-assembled air bag module (2), the gas generator (1) lying against the cover piece (8', 8") in the final assembled position under pretension of an elastic tensioning element (9, 19).

7. The means according to claim 6, **characterized in that** the cover piece (8') is formed in one piece with the air bag retaining plate (5).

8. The means according to claim 7, **characterized in that** in the final assembled position at least one spring clip (18) is arranged between the cover piece (8') and the housing (10) of the gas generator (1), which spring clip has a downward curving convex middle portion (19) and side portions (20) angled downwards, which are bent inwards and rest on radially inwardly angled flange portions (22) of the cover piece (8'), the ends (21), bent obliquely inwards and upwards, of the side portions (20) engaging in cutouts (23) of the housing (10), as a result of which the gas generator is secured in the cover piece (8') by the tension of the spring clip (18).

9. The means according to claim 8, **characterized in that** a three-armed spring clip (18) having three side portions (20) is used.

10. The means according to claim 8, **characterized in that** two double-armed spring clips (18) having a total of four side portions (20) are used.

11. The means according to claim 6, **characterized in that** the cover piece (8") consists of a plurality of metal brackets (17) with a centrally arranged rubber buffer (9).

12. The means according to claim 11, **characterized in that** the ends, bent towards the air bag retaining plate (5), of the metal brackets (17) have elongated holes (30) which are engaged by bent portions (31) of the air bag retaining plate (5) which point radially inwards in the final assembled position.

13. The means according to claim 12, **characterized in that** a cylindrical wall portion (24) intended for guiding the lower ends of the metal brackets (17) is formed at the air bag retaining plate (5) and extends coaxially with the side wall of the housing (10) of the generator (1).

14. The means according to claim 13, **characterized in that** a surrounding elastic seal (25) is arranged between the wall section (24) and the side wall of the housing (10).

15. The means according to claim 14, **characterized in that** the lower ends of three or more hooks (26) are embedded in the seal (25), the upper ends of the hooks engaging in cutouts (23') of the housing (10) in the final assembled position, as a result of which the gas generator (1) is elastically connected to the air bag module (2).

## Revendications

1. Moyen de fixation d'un générateur de gaz (1) dans un module d'airbag (2) préassemblé, qui comprend un support de générateur (3) en forme de pot, un coussin à gaz (4) et une tôle de retenue de coussin à gaz (5), le support de générateur (3), le coussin à gaz (4) et la tôle de retenue de coussin à gaz (5) présentant des ouvertures de montage agencées coaxialement les unes par rapport aux autres pour le générateur de gaz (1), et des moyens de serrage (6) étant prévus, à travers lesquels le bord (7) de l'ouverture de montage du coussin à gaz (4) peut être serré entre la tôle de retenue de coussin à gaz (5) et le support de générateur (3), et le boîtier (10) du générateur de gaz (1) étant réalisé sans bride, **caractérisé en ce que** la tôle de retenue de coussin à gaz (5) présente un collet cylindrique (11, 11') sur lequel le générateur de gaz (1) est fixé au moyen d'une fermeture à baïonnette ou à encliquetage.

2. Moyen selon la revendication 1, **caractérisé en ce que** dans le collet cylindrique (11') sont prévus plusieurs perçages (15) radiaux répartis sur la périphérie dans lesquels peuvent s'engager des goupilles (18) agencées sur le boîtier (10) du générateur de gaz (1) et déplaçables radialement vers l'intérieur à l'encontre de forces de rappel.

3. Moyen selon la revendication 1, **caractérisé en ce que** sur le bord inférieur du collet cylindrique (11) sont réalisées plusieurs parties de brides (12) tournées vers le bas et réparties sur la périphérie, lesquelles présentent une zone en forme de crochet (13) ouverte vers le haut, et **en ce que** sur le boîtier (10) du générateur de gaz (1) est monté un nombre correspondant de goupilles (14) faisant saillie radialement vers l'extérieur qui forment avec les régions en forme de crochets (13) une fermeture à baïonnette.

4. Moyen selon l'une des revendications 1 à 3, **caractérisé en ce qu'**il est prévu une partie de couvercle (8) limitant l'ouverture de montage vers le coussin à gaz (4), laquelle est reliée au module d'airbag préassemblé et sur laquelle le générateur de gaz (1) est en appui dans la position terminale de montage sous précontrainte d'une partie de serrage (9) élastique.

5. Moyen selon la revendication 4, **caractérisé en ce que** la partie de couvercle (8) comprend une multitude de barrettes (32, 32') qui s'étendent entre le générateur de gaz (1) et la tôle de retenue de coussin à gaz (5) et dont les extrémités inférieures (33, 33') sont repliées vers l'extérieur et vers le haut et s'engagent dans des évidements (34, 34') qui sont réalisés dans le bord inférieur du collet cylindrique (11, 11') de la tôle de retenue de coussin à gaz (5).

6. Moyen de fixation d'un générateur de gaz (1) dans un module d'airbag (2) préassemblé, qui comprend un support de générateur (3) en forme de pot, un coussin à gaz (4) et une tôle de retenue de coussin à gaz (5), le support de générateur (3), le coussin à gaz (4) et la tôle de retenue de coussin à gaz (5) présentant des ouvertures de montage agencées coaxialement les unes par rapport aux autres pour le générateur de gaz (1), et des moyens de serrage (6) étant prévus, à travers lesquels le bord (7) de l'ouverture de montage du coussin à gaz (4) peut être serré entre la tôle de retenue de coussin à gaz (5) et le support de générateur (3), et le boîtier (10) du générateur de gaz (1) étant réalisé sans bride et relié au module d'airbag (2) au moyen d'une fermeture à baïonnette ou à encliquetage, **caractérisé en ce qu'**il est prévu une partie de couvercle (8', 8") limitant l'ouverture de montage vers le coussin à gaz, laquelle est reliée au module d'airbag préassemblé et sur laquelle le générateur de gaz (1) est en appui dans la position terminale de montage sous précontrainte d'une partie de serrage (9) élastique.

7. Moyen selon la revendication 6, **caractérisé en ce que** la partie de couvercle (8') est réalisée d'un seul tenant avec la tôle de retenue de coussin à gaz (5).

8. Moyen selon la revendication 7, **caractérisé en ce que** dans la position terminale de montage, au moins un étrier élastique (8') est agencé entre la partie de couvercle (8') et le boîtier (10) du générateur de gaz (1), étrier qui présente une région médiane (19) de forme convexe vers le bas et des régions latérales (20) coudées vers le bas, lesquelles sont pliées vers l'intérieur et prennent appui sur des régions de brides (22) coudées radialement vers l'intérieur, les extrémités (21) coudées en biais vers l'intérieur et vers le haut, des régions latérales (20), s'engageant dans des évidements (23) du boîtier (10), grâce à quoi le générateur de gaz est fixé dans la partie de couvercle (8') sous tension de l'étrier élastique.

9. Moyen selon la revendication 8, **caractérisé en ce qu'**on utilise un étrier élastique (18) à trois bras avec trois régions latérales (20).

10. Moyen selon la revendication 8, **caractérisé en ce qu'**on utilise deux étriers élastiques (18) à deux bras avec en tout quatre régions latérales (20).

11. Moyen selon la revendication 6, **caractérisé en ce que** la partie de couvercle (8") est constituée par une multitude d'étriers métalliques (17) avec un tampon de caoutchouc (9) agencé au centre.

12. Moyen selon la revendication 11, **caractérisé en ce que** les extrémités des étriers métalliques (17), coudées en direction de la tôle de retenue du coussin à gaz (5), présentent des trous oblongs (30) dans lesquels, dans la position terminale de montage, s'engagent des portions coudées (31) tournées radialement vers l'intérieur, de la tôle de retenue de coussin à gaz (5).

13. Moyen selon la revendication 12, **caractérisé en ce que** sur la tôle de retenue de coussin à gaz (5) est réalisé un tronçon de paroi (24) cylindrique s'étendant coaxialement à la paroi latérale du boîtier (10) du générateur de gaz (1) pour guider les extrémités inférieures des étriers métalliques (17).

14. Moyen selon la revendication 13, **caractérisé en ce que** un joint (25) élastique périphérique est agencé entre le tronçon de paroi (24) et la paroi latérale du boîtier (10).

15. Moyen selon la revendication 14, **caractérisé en ce que** dans le joint (25) sont noyées les extrémités inférieures de trois crochets (26) ou plus, dont les extrémités supérieures, dans la position terminale de montage, s'engagent dans des évidements (23') du boîtier (10), grâce à quoi le générateur de gaz (1) est relié de manière élastique avec le module d'airbag (2).
